# EUROPÄISCHE PATENTSCHRIFT

(11) **EP 3 969 255 B1**
(45) Veröffentlichungstag und Bekanntmachung des Hinweises auf die Patenterteilung: **13.09.2023**
(21) Anmeldenummer: 20727921.7
(22) Anmeldetag: 07.05.2020
(51) Int. Cl.: B29C 51/30, B29C 51/00, B29C 51/26, B29C 43/36, B29C 65/20, B29L 23/00, B29L 31/30, B32B 3/30, B32B 5/02, B60N 3/04, B60R 13/08, D04H 1/00, D04H 1/55, D04H 1/76, B29C 65/02, B29C 51/10, B29C 51/08, B29C 51/32, B32B 1/08, B32B 3/02, B32B 3/20, B32B 5/18, B32B 5/26, B32B 7/02, B32B 7/12, B32B 7/04

(54) **VERFAHREN ZUR HERSTELLUNG EINES HOHLPROFILBAUTEILS, FORMWERKZEUG UND HOHLPROFILBAUTEIL**
METHOD FOR PRODUCING A HOLLOW PROFILED COMPONENT, MOLDING TOOL, AND HOLLOW PROFILED COMPONENT
PROCÉDÉ DE FABRICATION D'UN COMPOSANT PROFILÉ CREUX, OUTIL DE MOULAGE ET COMPOSANT PROFILÉ CREUX

(30) Priorität: 17.05.2019 DE 102019113056
(43) Veröffentlichungstag der Anmeldung: 23.03.2022
(73) Patentinhaber: Odenwald-Chemie GmbH, 69250 Schönau (DE)
(72) Erfinder: HOFSTRÖSSLER, Patrick, 69267 Wiesenbach (DE); FRIEBEL, Kevin, 74867 Neunkirchen (DE); BENZUS, Boris, 69124 Heidelberg (DE); HOTZ, Dominik, 69250 Schönau (DE)
(74) Vertreter: Müller Schupfner & Partner Patent- und Rechtsanwaltspartnerschaft mbB
(86) Internationale Anmeldenummer: PCT/EP2020/062695
(87) Internationale Veröffentlichungsnummer: WO 2020/233996

(56) Entgegenhaltungen:
- EP-B1- 1 484 162
- JP-A- H11 343 938
- US-A1- 2019 061 286

## Beschreibung

Die vorliegende Erfindung betrifft ein Verfahren zur Herstellung eines Hohlprofilbauteils und ein Hohlprofilbauteil.

Aus dem Stand der Technik sind Hohlprofilbauteile, insbesondere in Gestalt von kanalförmigen Hohlprofilbauteilen, hinlänglich bekannt. Beispielsweise ist in der Automobilindustrie ein Akustikdiffusor bekannt, der ein solches kanalartiges Hohlprofilbauteil darstellt. Dabei kann ein solches kanalartiges Hohlprofilbauteil bevorzugt einen generell geschwungenen Verlauf entlang einer Haupterstreckungsrichtung bzw. Vorzugsrichtung und an seiner kanalartigen Wandung einen strukturierten bzw. profilierten Verlauf aufweisen.

Typischerweise werden solche Hohlprofilbauteile mittels Blasformen in einem Stück oder in einem Twinsheet-Verfahren als Schaumkanäle hergestellt.

Alternativ ist es bekannt, Halbschalenprofile zur fertigen, die wiederum in einem anschließenden Verfahrensschritt über einen entsprechenden Flanschbereich miteinander gefügt werden. Die sich daraus ergebenden Hohlprofilbauteile weisen in entsprechender Weise einen abstehenden Flanschbereich auf, der in Hinblick auf bauraumökonomische Gesichtspunkte in der Regel kritisch zu bewerten ist. Solche Hohlprofilbauteile lassen sich alternativ auch als Spritzgussteile einteilig oder mehrteilig herstellen. Sofern das Hohlprofilbauteil mehrteilig ausgebildet ist, werden die einzelnen Teile miteinander verschweißt bzw. verclipst. Zudem müssen die Halbschalenprofile zwischengelagert werden, bevor sie in einem aufwändigen Fügeprozess miteinander gefügt werden.

Die Lehren der JP H11 343 938 A und US 2019 / 061 286 A1 betreffen das Herstellen von Vliesbauteilen.

Es ist eine Aufgabe der vorliegenden Erfindung, ein Verfahren bzw. ein Formwerkzeug bereitzustellen, mit dem sich ein verbessertes Hohlprofilbauteil realisieren lässt, insbesondere in Hinblick auf die Herstellungskosten, die Bauteilqualität die Bauraumökonomie und die Herstellungsgeschwindigkeit.

Diese Aufgabe wird gelöst durch ein Verfahren gemäß Anspruch 1.

Weitere Vorteile und Eigenschaften der Erfindung ergeben sich aus den Unteransprüchen sowie der Beschreibung und den beigefügten Figuren.

Gemäß einem ersten Aspekt der vorliegenden Erfindung ist ein Verfahren zur Herstellung eines Hohlprofilbauteils, insbesondere eines kanalförmigen Hohlprofilbauteils, aus einem Vlieswerkstoff, vorgesehen, umfassend:
- Bereitstellen einer ersten Vlieswerkstofflage und einer zweiten Vlieswerkstofflage,
- Anordnen der ersten Vlieswerkstoff lage und der zweiten Vlieswerkstoff lage in einem Formwerkzeug mit einer ersten Formwerkzeughälfte, einer zweiten Formwerkzeughälfte und einem Kernkörper, wobei zwischen der ersten Formwerkzeughälfte und der zweiten Formwerkzeughälfte eine Formation aus dem ersten Vlieswerkstoff, dem zweiten Vlieswerkstoff und dem Kernkörper angeordnet wird, wobei in der Formation der Kernkörper zwischen der ersten Vlieswerkstofflage und der zweiten Vlieswerkstoff lage angeordnet ist, und
- Umformen, insbesondere gleichzeitiges Umformen, der ersten Vlieswerkstofflage und der zweiten Vlieswerkstofflage im Formwerkzeug zur Bildung einer ersten Vliesteilschale und/ einer zweiten Vliesteilschale.

Gegenüber dem Stand der Technik ist es erfindungsgemäß vorgesehen, dass die erste Vlieswerkstofflage und die zweite Vlieswerkstofflage zusammen in einem Formwerkzeug unter Verwendung eines zwischen ihnen angeordneten Kernkörpers umgeformt werden, insbesondere durch Pressen umgeformt werden. Durch dieses Umformen ist es in vorteilhafter Weise möglich, sowohl die erste als auch die zweite Vlieswerkstofflage in eine erste Vliesteilschale und eine zweite Vliesteilschale zu überführen, die zur späteren Ausbildung des Hohlprofilbauteils anschließend nur noch zusammengefügt werden müssen. Dabei dient der Kernkörper insbesondere jeweils als Widerlager für die erste Formwerkzeughälfte und für die zweite Formwerkzeughälfte. Insbesondere wird die erste Vlieswerkstofflage im Formwerkzeug derart gegen den Kernkörper gepresst, dass sich die erste Vliesteilschale bildet. Gleiches gilt für die zweite Vlieswerkstofflage und die zweite Vliesteilschale. Mit anderen Worten: die Außenkontur des Kernkörpers gibt im Sinne eines Platzhalters im Formwerkzeug vorzugsweise die Formgebung für das später gefertigte Hohlprofilbauteil vor, insbesondere für dessen Hohlbereich. Dabei ist es bevorzugt vorgesehen, dass die erste Vliesteilschale und die zweite Vliesteilschale eine erste Vlieshalbschale und eine zweite Vlieshalbschale sind, so dass nur zwei Bauteile aneinander gefügt werden müssen, um ein Hohlprofilbauteil zu fertigen. Es ist allerdings auch vorstellbar, dass mehrere erste Vliesteilschalen und mehrere zweite Vliesteilschalen zusammengefügt werden, um einen geschlossenen Umfang in mindestens einer Schnittebene durch das Hohlprofilbauteil zu realisieren. Vorzugsweise ist es vorgesehen, dass das Hohlprofilbauteil kanalförmig ausgestaltet ist. Das heißt, das Hohlprofilbauteil weist stirnseitig Öffnungen auf, wobei sich bevorzugt das Hohlprofilbauteil zwischen den beiden Öffnung entlang eines generellen Verlaufs erstreckt, der beispielsweise geradlinig und/oder geschwungen sein kann, wobei insbesondere zwischen den beiden Öffnungen der Umfang in einer senkrecht zum generellen Verlauf liegenden Ebene geschlossen ist, insbesondere entlang der gesamten Erstreckung entlang des generellen Verlaufs. Solche derartigen kanalförmigen Hohlprofilbauteile lassen sich in vorteilhafter Weise zur Gas- bzw. Luftführung in Fahrzeugen verwenden, insbesondere als Akustikdiffusor. Alternativ oder ergänzend ist es vorstellbar, dass das Hohlprofilbauteil seitliche bzw. laterale Öffnungen (bezogen auf den generellen Verlauf) aufweist.

Ferner ist es bevorzugt vorgesehen, dass ein Hohlbereich (gemessen bezogen auf eine Außenfläche des Hohlprofilbauteils, die dem Hohlbereich zuzuordnen ist) des Hohlprofilbauteils einen Anteil von weniger als 25 %, bevorzugt weniger als 15 % und besonders bevorzugt einen Anteile von weniger als 10 % am gesamten Hohlprofilbauteils ausmacht (gemessen bezogen auf die Außenfläche). Beispielsweise handelt es sich bei dem Hohlprofilbauteil um eine Komponente, die im Fußraumbereich eines Fahrzeugs verbaut ist. Insbesondere erweist es sich als Vorteil, dass mittels des Verfahrens zeitgleich die erste Vliesteilschale und die zweite Vliesteilschale hergestellt werden können, wodurch das Herstellungsverfahren des Hohlprofilbauteils beschleunigt werden kann. Darüber hinaus gestattet das Verfahren die Möglichkeit, aus einer ersten Vlieswerkstofflage und einer zweiten Vlieswerkstofflage eine formstabile erste Vliesteilschale und/oder eine formstabile zweite Vliesteilschalen zu formen, die geeignet sind, ein formstabiles bzw. starres Hohlprofilbauteil bereitzustellen. Dies erweist sich insbesondere deswegen als Vorteil, weil ein Hohlprofilbauteil aus einem Vliesstoff bzw. Vlieswerkstoff preisgünstiger und auch leichter ist als ein baugleiches Hohlprofilbauteil aus einem Kunststoff, das in der Regel im Blasformverfahren oder zur Ausbildung von Kanälen aus Schaumstoff mittels eines Twinsheet-Verfahrens hergestellt wird. Darüber hinaus weist ein Hohlprofilbauteil aus Vliesstoff erhebliche Vorteile hinsichtlich dessen akustischen Wirksamkeit, dessen Luftdurchlässigkeit und/oder dessen thermischen Isolation auf, insbesondere im Vergleich zu solchen Hohlprofilbauteilen, die aus Kunstsoff bzw. Schaumstoff gefertigt werden. Dabei wird insbesondere auf die üblichen Vorgehensweisen zum Formen von Hohlprofilbauteilen verzichtet, bei denen zum Beispiel unter Verwendung von Vakuum eine Profilierung vorgegeben wird. Insbesondere bei Vliesmaterialien, wäre in diesem Fall eine Folie erforderlich, die auf das Vliesmaterial kaschiert würde und typischerweise bei der Verstreckung reißen kann. Insbesondere hat es sich herausgestellt, dass selbst bei hohem Vakuum keine richtige Ausformung zur Bildung einer geeigneten ersten Vliesteilschale und einer zweiten Vliesteilschale möglich ist.

Entsprechend bietet das Verfahren mit dem Kernkörper eine Möglichkeit, aus einer ersten und einer zweiten Vlieswerkstofflage effizient ein Hohlprofilbauteil aus einem Vlieswerkstoff zu realisieren. Dabei ist insbesondere die Innenseite der ersten Formwerkzeughälfte und/oder die Innenseite der zweiten Formwerkzeughälfte als Negativform ausgebildet und der Kernkörper dient insbesondere als innenliegender Stempel bzw. Widerlager, der zwischen der ersten Formwerkzeughälfte und der zweiten Formwerkzeughälfte während des Pressvorgangs angeordnet ist. Vorzugsweise ist der Kernkörper als separates Bauteil im Formwerkzeug ausgestaltet. Beispielsweise umfasst der Kernkörper Griffe, die während des Pressvorgangs und nach dem Pressvorgang vom Formwerkzeug abstehen, so dass eine einfache Entnahme bzw. ein einfaches Einsetzen des Kernkörpers möglich ist. Das Zuführen der ersten Vliesstofflage und der zweiten Vliesstofflage, die Entnahme des Kernkörper bzw. dessen Einbringen zwischen die erste Formwerkzeughälfte und die zweite Formwerkzeughälfte und/oder die Entnahme des Hohlprofilbauteils kann dabei manuell oder automatisiert erfolgen. Beispielsweise werden die erste Vliesstofflage und die zweite Vliesstofflage als Rollenware oder als Zuschnitt bereitgestellt.

Weiterhin ist es bevorzugt vorgesehen, dass die erste Vliesstofflage und/oder die zweite Vliesstofflage während des Umformens mit mindestens einer Öffnung versehen wird, wobei die Öffnung besonders bevorzugt während des Umformens mit dem Kernkörper ausgestanzt bzw. gepincht wird. Dabei ist die Öffnung nicht am Rand der ersten Vliesstofflage und/oder der zweiten Vliesstofflage ausgeformt, sondern ins Innere versetzt angeordnet und bildet dann beispielsweise eine fensterähnliche bzw. Luken-ähnliche laterale Öffnung im gefertigten Zustand des Hohlprofilbauteils. Hierzu ist an der Außenseite des Kernkörpers bzw. der ersten und/oder zweiten Formwerkzeughälfte ein entsprechender Abschnitt ausgebildet, der zum Ausstanzen der Öffnung geeignet ist. Beispielsweise handelt es sich hierbei um einen klingenähnlichen Vorsprung, gegen den die erste Vliesstofflage und/oder die zweite Vliesstofflage während des Umformens gepresst wird, um die Öffnung auszustanzen.

Insbesondere werden die erste Vliesstofflage und die zweite Vliesstofflage in einem Vorbereitungsschritt erwärmt, beispielsweise in einem Ofen, einer Heißpresse, einer Mikrowelle, und/oder einem Strahlerfeld. Es ist auch vorstellbar, dass die erste Vliesstofflage und/oder die zweite Vliesstofflage mittels eines Reibverfahrens erwärmt werden. Anschließend wird die noch warme bzw. heiße erste Vliesstofflage und/oder zweite Vliesstofflage in das Formwerkzeug eingeführt. Dadurch ist es in vorteilhafter Weise möglich durch das Formpressen der erwärmten ersten und/oder zweiten Vliesstofflage diese dauerhaft zu verformen.

Vorzugsweise ist es vorgesehen, dass die erste Vliesstofflage und/oder die zweite Vliesstofflage ein Bindemittel umfasst. Insbesondere ist das Bindemittel derart ausgebildet, dass es unter Wärmeeinfluss verflüssigt. Dadurch ist es in vorteilhafter Weise möglich eine stoffschlüssige Verbindung zwischen der ersten Vliesteilschale und der zweiten Vliesteilschale zu realisieren, in dem die im späteren Flanschabschnitt aufgewärmten Bereiche der ersten Vliesteilschale und der zweiten Vliesteilschale in Kontakt gebracht werden und über das Bindemitte entsprechend miteinander stoffschlüssige verbunden werden. Außerdem lässt sich die warme erste bzw. zweite Vliesstofflage im erwärmten Zustand, d. h. wenn das Bindemittel flüssig ist, verformen und nach dem Aushärten des Bindemittels wird eine formstabile und starre erste bzw. zweite Vliesstofflage bereitgestellt. Beispielsweise handelt es sich bei der ersten Vliesstofflage und/oder der zweiten Vliesstofflage um ein thermisch verformbares Material, das beispielsweise aus Naturfasern, einem Bauwollfasergemisch und/oder Kunststofffasern zusammengesetzt ist und vorzugsweise in einem Einzel- oder Mehrlagenaufbau bereitgestellt wird. Auch die Verwendung von Glasfasern ist vorstellbar. Dabei kann die erste Vliesstofflage und/oder die zweite Vliesstofflage aus Einzelfasern oder Mischfasern zusammengesetzt sein.

Es ist auch vorstellbar, dass die erste Vliesteilschale und die zweite Vliesteilschale ohne Flanschabschnitt miteinander verbunden werden, beispielsweise über eine außen anliegende Folie.

Gemäß der vorliegenden Erfindung ist es vorgesehen, dass nach dem Umformen die erste Vliesteilschale und die zweite Vliesteilschale im Formwerkzeug zusammengefügt werden. Dadurch ist es in vorteilhafter Weise möglich, unmittelbar im Anschluss an die Umformung das Hohlprofilbauteil zu realisieren, indem die erste Vliesteilschale an die zweite Vliesteilschale gefügt wird. Beispielsweise ist es vorstellbar, dass die erste Vliesteilschale und die zweite Vliesteilschale miteinander verklebt und/oder verschweißt werden, das heißt, insbesondere stoffschlüssig miteinander verbunden werden. Mit Vorteil lässt sich auf diese Weise ein Lagern der einzeln hergestellten Vliesteilschalen vermeiden, wie es zum Beispiel bei dem üblichen Vorgehen zum Herstellen von Hohlprofilbauteilen aus Kunststoff üblich ist. Insbesondere werden die erste Vliesteilschale und die zweite Vliesteilschale miteinander stoffschlüssig zusammengefügt, indem das Formwerkzeug ohne Kernkörper wieder geschlossen wird und die erste Formwerkzeughälfte und die zweite Formwerkzeughälfte aufeinander gepresst werden, während von der ersten Vliesteilschale und der zweiten Vliesteilschale überstehende Abschnitte zwischen den aufeinander gepressten ersten Formwerkzeughälfte und der zweiten Formwerkzeughälfte angeordnet sind.

Insbesondere ist es vorgesehen, dass vor dem Zusammenfügen der Kernkörper aus dem Formwerkzeug entfernt wird. Insbesondere ist es dabei vorgesehen, dass nach dem Umformungsprozess zunächst einmal das Formwerkzeug wieder geöffnet wird, so dass die erste Formwerkzeughälfte von der zweiten Formwerkzeughälfte beabstandet ist. Bevorzugt ist es vorgesehen, dass die erste Vlieswerkstofflage an der ersten Formwerkzeughälfte anhaftet bzw. angehaftet bleibt, insbesondere wegen eines entsprechenden Fixierungsmittels an der ersten Formwerkzeughälfte. Weiterhin ist es bevorzugt vorgesehen, dass die erste Vliesteilschale zum Beispiel an der ersten Formwerkzeughälfte fixiert wird bzw. kurzfristig fixiert bleibt, um zu verhindern, dass beim ersten Öffnen des Formwerkzeugs die erste Vlieswerkstofflage verrutscht bzw. sich gegenüber der zweiten Vlieseilschale verschiebt und/oder mit dem Kernelement entnommen wird. Dies stellt in vorteilhafter Weise sicher, dass beim anschließenden Fügeprozess die erste Vliesteilschale und die zweite Vliesteilschale gewünscht ausgerichtet und orientiert sind. Es ist beispielsweise vorstellbar, dass ein aus dem Formwerkzeug herausragender Abschnitt der ersten Vlieswerkstofflage an eine Außenseite der ersten Formwerkzeughälfte angebunden wird, beispielsweise über eine Öse oder ein anderes Formschlussmittel, um sicherzustellen, dass sich die erste Vlieswerkstofflage nicht von der ersten Formwerkzeughälfte löst, wenn die erste Formwerkzeughälfte von der zweiten Formwerkzeughälfte beabstandet wird. Es ist auch vorstellbar dass die erste Vliesstofflage bzw. die erste Vliesteilschale mittels mindestens eines Klebepunkts, mittels Vakuum und/oder eines Spannrahmens an der ersten Formwerkzeughälfte zumindest zeitweise fixiert wird.

Erfindungsgemäß wird die erste Vliesteilschale mit der zweiten Vliesteilschale mittels einer Restwärme der ersten Vliesteilschale und/oder der zweiten Vliesteilschale verschweißt. Hierzu ist es insbesondere vorgesehen, dass die erste Formwerkzeughälfte und die zweite Formwerkzeughälfte zeitnah nach Entfernen des Kernkörpers wieder zusammengefügt werden, insbesondere entlang einer Pressrichtung zusammengepresst werden. Dadurch ist es in vorteilhafter Weise möglich, die Restwärme in der ersten Vliesteilschale und der zweiten Vliesteilschale dazu zu nutzen, eine stoffschlüssige Verbindung zwischen der ersten Vliesteilschale und der zweiten Vliesteilschale zu bilden, insbesondere über Kragenelemente der beispielsweise topfförmig ausgeformten ersten Vliesteilschale und der zweiten Vliesteilschale, wobei die Kragenelemente zwischen Stirnseiten bzw. Abschnitten der ersten Formwerkzeughälfte und der zweiten Formwerkzeughälfte, die insbesondere zumindest einen Teil eines Rahmen des Formwerkzeugs bilden, während des Pressvorgangs angeordnet sind. Durch das Verbinden mittels der Restwärme lässt sich in vorteilhafter Weise eine homogen ausgeprägte stoffschlüssige Verbindungsnaht realisieren, die sich insbesondere als besonders elastische, d. h. nicht spröde, Verbindung herausgestellt hat. Außerdem gestattet das Verpressen die Realisierung von Schweiß-Geometrien, die mittels Infrarotverschweißung nicht möglich wären. Vorzugsweise vergehen zwischen der Entnahme des Kernkörpers und dem Verschweißen durch das Aufeinanderpressen der ersten Vliesteilschale und der zweiten Vliesteilschale mittels des Formwerkzeugs weniger als 120 Sekunden, bevorzugt weniger als 90 Sekunden und besonders bevorzugt weniger als 40 Sekunden. Durch das unmittelbar im Anschluss an die Umformung stattfindende Fügen lässt sich in vorteilhafter Weise eine Gesamtzykluszeit reduzieren.

Es ist auch vorstellbar, dass die erste Vliesteilschale und/oder die zweite Vliesteilschale mittels eines, vorzugsweise zwischengeschalteten, Aufheizvorgang auf die nötige Restwärme gebracht und miteinander verschweißt werden.

Vorzugsweise werden die erste Vliesteilschale und die zweite Vliesteilschale derart erwärmt bzw. erhitzt, dass die zu erwartende Restwärme nach dem Formgebungsprozess ausreicht, um über das Bindemittel in der ersten Vliesteilschale und der zweiten Vliesteilschale die stoffschlüssige Verbindung zu realisieren. Dabei wird die Verbindung vorzugsweise zumindest durch eine Plastifizierung und/oder ein Verkrallen der einzelnen Fasern bzw. Elemente unterstützt. Vorzugsweise wird die Verbindung allein durch die Vliesfasern realisiert, ohne die Beanspruchung eines Bindemittels hierfür.

Weiterhin ist es vorstellbar, dass ein Bereich der stoffschlüssigen Verbindung zwischen der ersten Vliesteilschale und der zweiten Vliesteilschale eine Struktur und/oder eine Prägung aufweist, innerhalb des Flanschabschnitts. Dadurch lässt sich die Verbindungsstärke zwischen der ersten Vliesteilschale und der zweiten Vliesteilschale weiter verbessern bzw. auf den jeweiligen Anwendungsfall optimieren.

Insbesondere ist es vorgesehen, dass die erste Formwerkzeughälfte und die zweite Formwerkzeughälfte und/oder der Kernkörper aus Metall insbesondere aus Aluminium und/oder Stahl gefertigt ist. Insbesondere im Vergleich zu Formwerkzeughälften, die aus Kunststoff gefertigt sind, erweist sich die Fertigung der ersten Formwerkzeughälfte und der zweiten Formwerkzeughälfte und des Kernkörperelements insofern als vorteilhaft, dass eine aus Metall gefertigte erste bzw. zweite Formwerkzeughälfte bzw. ein Kernkörper aus Metall den bei dem Zusammenpressen entstehenden Kräften standhalten kann.

Vorzugsweise ist es vorgesehen, dass die erste Vliesteilschale und die zweite Vliesteilschale über einen am späteren Hohlprofilbauteil abstehenden Flanschabschnitt miteinander gefügt werden, wobei der Flanschabschnitt mit einer Länge zwischen 0,5 mm und 10 mm, bevorzugt zwischen 0,5 mm und 6 mm und besonders bevorzugt zwischen 0,5 mm und 3 mm absteht und/oder eine Dicke aufweist, die einen Wert zwischen 0,01 mm und 2 mm, bevorzugt zwischen 0,05 mm und 1,5 mm und besonders bevorzugt zwischen 0,5 mm und 1 mm annimmt. Entsprechend lässt sich in vorteilhafter Weise ein Flanschabschnitt realisieren, der vergleichsweise schmal ist, insbesondere im Vergleich zu denen, die von alternativen Verfahren zur Herstellung von Halbschalenelementen aus Vlieswerkstoff bekannt sind. Entsprechend lässt sich ein bauraumökonomisches Bauteil realisieren, das einen vergleichsweise geringen Überhang am äußeren Umfang aufweist, der lediglich der Anbindung zwischen den beiden Bauteilen dient und keinen weiteren funktionalen Zweck am jeweiligen Hohlkörperprofilbauteil erfüllt. Dabei ist es insbesondere vorgesehen, dass die Dicke des Flanschabschnitts beeinflusst wird durch eine Dicke der ersten Vlieswerkstofflage und/oder zweiten Vlieswerkstofflage, dem Material der ersten Vlieswerkstofflage und der zweiten Vlieswerkstofflage und/oder einem Druck, der während des Pressens zum Fügen der ersten Vliesteilschale und der zweiten Vliesteilschale verwendet wird.

Vorzugsweise ist es vorgesehen, dass die erste Vliesteilschale und die zweite Vliesteilschale über einen am späteren Hohlprofilbauteil abstehenden Flanschabschnitt miteinander gefügt werden, wobei der Flanschabschnitt
- mit einer Länge zwischen 0,5 mm und 10 mm, bevorzugt zwischen 0,5 mm und 6 mm und besonders bevorzugt zwischen 0,5 mm und 3 mm absteht und/oder
- eine Dicke aufweist, die einen Wert zwischen 0,01 mm und 3 mm, bevorzugt zwischen 0,05 mm und 2,5 mm und besonders bevorzugt zwischen 0,5 mm und 2 mm.

Zweckmäßigerweise wird das Zusammenfügen bei einer Temperatur zwischen 50 und 500°C, bevorzugt zwischen 80°C und 400° C und besonders bevorzugt zwischen 100 °C und 300 °C und/oder einem Druck zwischen 1 und 30.000 kg/cm², bevorzugt zwischen 1 und 25.000 kg/cm² und besonders bevorzugt zwischen 1 und 20.000 kg/cm² realisiert. Besonders bevorzugt ist es vorgesehen, dass der Druck zum Umformen und der Druck zum Fügen einander im Wesentlichen entsprechen. Alternativ ist es auch vorstellbar, dass der Druck beim Umformen grö-ßer oder kleiner ist als beim Fügen in dem Formwerkzeug. Die Temperatur zwischen 100 °C und 300°C stellt sicher, dass für die Mehrheit der Bindemittel in der ersten Vliesstofflage und der zweiten Vliesstofflage dieses während des Fügeprozesses flüssig ist, um die stoffschlüssige Verbindung zu realisieren. Weiterhin ist es vorgesehen, dass die erste Vliesstofflage und/oder die zweite Vliesstofflage im Ofen derart erwärmt werden, dass die Restwärme nach dem Umformen für das Zusammenfügen ausreichend hoch ist.

Insbesondere ist es vorgesehen, dass die erste Vlieswerkstofflage und/oder die zweite Vlieswerkstofflage aus einem Vlies hergestellt ist die erste Vlieswerkstofflage und/oder die zweite Vlieswerkstofflage aus einem Vlies mit einer Grammatur zwischen 1 und 2500 g/m², bevorzugt zwischen 100 und 2000 g/m² und besonders bevorzugt mit einer Grammatur zwischen 700 g/m² und 950 g/m² hergestellt ist. Insbesondere für eine Grammatur zwischen 400 g/m² und 950 g/m² ist es in vorteilhafter Weise möglich möglichst geringe Toleranzen hinsichtlich der Formgerbung des Hohlprofilbauteils zu realisieren.

Insbesondere ist die erste Vlieswerkstofflage und/oder die zweite Vlieswerkstofflage aus einem Vlies mit einer Grammatur zwischen 400 g/m² und 950 g/m² oder sogar von im Wesentlichen 500 g/mm² hergestellt.

Insbesondere ist es vorgesehen, dass beim Umformen ein strukturierter Verlauf in der ersten Vliesteilschale und/oder der zweiten Vliesteilschale realisiert wird. Dadurch ist es in vorteilhafter Weise möglich, zum Beispiel Rillenkanäle und/oder Ähnliches am Umfang des Hohlkörperbauteils zu realisieren, die zum Beispiel bei der Luftführung für entsprechende Formstabilität sorgen können.

Insbesondere ist es vorgesehen, dass die erste Vliesteilschale und/oder die zweite Vliesteilschale im Wesentlichen einen topfförmigen Verlauf aufweist, wobei der topfförmige Verlauf abgeschlossen wird durch ein Kragenelement, insbesondere durch Kragenelemente auf gegenüberliegenden Seiten (in einer senkrecht zur Vorzugsrichtung des generellen Verlaufs verlaufenden Richtung), wobei diese Kragenelemente dazu vorgesehen sind, dass die erste Vliesteilschale und die zweite Vliesteilschale miteinander unter Ausbildung des Flanschabschnittes zusammenzufügen sind.

Ein weiterer Gegenstand der vorliegenden Erfindung betrifft ein Verfahren zur Herstellung eines Hohlprofilbauteils, insbesondere eines kanalförmigen Hohlprofilbauteils, aus einem Schaumwerkstoff, umfassend die Schritte:
- Bereitstellen einer ersten Schaumwerkstofflage und einer zweiten Schaumwerkstofflage,
- Anordnen der ersten Schaumwerkstofflage und der zweiten Schaumwerkstofflage in einem Formwerkzeug mit einer ersten Formwerkzeughälfte, einer zweiten Formwerkzeughälfte und einem Kernkörper, wobei zwischen der ersten Formwerkzeughälfte und der zweite Formwerkzeughälfte eine Formation aus der ersten Schaumwerkstofflage, der zweiten Schaumwerkstofflage und dem Kernkörper angeordnet wird, wobei in der Formation der Kernkörper zwischen dem ersten Schaumwerkstofflage und der zweiten Schaumwerkstofflage angeordnet ist, und
- Umformen, insbesondere gleichzeitiges Umformen, der ersten Schaumwerkstofflage und der zweiten Schaumwerkstofflage im Formwerkzeug Bildung einer ersten Schaumstoffteilschale und/oder einer zweiten Schaumstoffteilschale. Alle für das Verfahren zur Herstellung des Hohlprofilbauteils aus dem Vlieswerkstoff beschriebenen Eigenschaften und Vorteile lassen sich analog auf das Verfahren des Hohlprofilbauteils aus dem Schaumwerkstoff übertragen und andersrum.

Ein weiterer Gegenstand der vorliegenden Erfindung betrifft ein Verfahren zur Herstellung eines Hohlprofilbauteils, insbesondere eines kanalförmigen Hohlprofilbauteils, aus einem Schaumwerkstoff und einem Vlieswerkstoff, umfassend:
- Bereitstellen einer ersten Schaumwerkstofflage und einer ersten Vlieswerkstofflage,
- Anordnen der ersten Schaumwerkstofflage und der ersten Vlieswerkstofflage in einem Formwerkzeug mit einer ersten Formwerkzeughälfte, einer zweiten Formwerkzeughälfte und einem Kernkörper, wobei zwischen der ersten Formwerkzeughälfte und der zweite Formwerkzeughälfte eine Formation aus der ersten Schaumwerkstofflage, der ersten Vlieswerkstofflage und dem Kernkörper angeordnet wird, wobei in der Formation der Kernkörper zwischen dem ersten Schaumwerkstofflage und der ersten Vlieswerkstofflage angeordnet ist, und
- Umformen, insbesondere gleichzeitiges Umformen, der ersten Schaumwerkstofflage und der erste Vlieswerkstofflage im Formwerkzeug zur Bildung einer ersten Schaumstoffteilschale und/oder einer ersten Vliesteilschale. Alle für das Verfahren zur Herstellung des Hohlprofilbauteils aus dem Vlieswerkstoff beschriebenen Eigenschaften und Vorteile lassen sich analog auf das Verfahren des Hohlprofilbauteils aus dem Schaumwerkstoff und dem Vlieswerkstoff übertragen und andersrum. Insbesondere ist es vorgesehen, dass die erste Vliesteilschale und die erste Schaumwerkstofflage im Formwerkzeug miteinander gefügt werden, insbesondere unter Ausbildung einer Verbindungsnaht.

Ein weiterer Aspekt der vorliegenden Erfindung betrifft ein Formwerkzeug mit einer ersten Formwerkzeughälfte, einer zweiten Formwerkzeughälfte und einem Kernkörper, wobei das Formwerkzeug dazu ausgelegt ist, ein erfindungsgemäß Verfahren zur Herstellung eines Hohlprofilbauteils, insbesondere eines kanalförmigen Hohlprofilbauteils, aus einem Vlieswerkstoff oder einem Schaumwerkstoff durchzuführen. Alle für das Verfahren zur Herstellung des Hohlprofilbauteils beschriebenen Eigenschaften und Vorteile lassen sich analog auf das Formwerkzeug übertragen und andersrum.

Ein weiterer Aspekt der vorliegenden Erfindung betrifft ein Hohlprofilbauteil, wobei das Hohlprofilbauteil hergestellt ist mit einem erfindungsgemäßen Verfahren. Alle für das Verfahren beschriebenen Vorteile und Eigenschaften lassen sich analog auf das Hohlprofilbauteil übertragen und andersrum.

Ein weiterer Gegenstand der vorliegenden Erfindung betrifft ein Hohlprofilbauteil, das
zumindest teilweise zusammengesetzt ist aus einer ersten Vliesteilschale und einer zweiten Vliesteilschale, wobei die erste Vliesteilschale und die zweite Vliesteilschale über eine homogen ausgebildete, stoffschlüssige Verbindungsnaht miteinander verbunden sind oder
- zumindest teilweise zusammengesetzt aus einer ersten Schaumstoffteilschale und einer zweiten Schaumstoffteilschale, wobei die erste Schaumstoffteilschale und die zweite Schaumstoffeilschale über eine homogen ausgebildete, stoffschlüssige Verbindungsnaht miteinander verbunden sind. Alle für das Verfahren beschriebenen Vorteile und Eigenschaften lassen sich analog auf das Hohlprofilbauteil übertragen und andersrum.

Insbesondere unterscheidet sich das Hohlprofilbauteil vom Stand der Technik durch die homogen ausgebildete stoffschlüssige Verbindungsnaht, die sich vorzugsweise entlang des Flanschabschnitts erstreckt. Dabei unterscheidet sich die homogen ausgebildete Verbindungsnaht insbesondere von den Verbindungsnähten aus dem Stand der Technik, die mittels Infrarotverschweißung und/oder Ultraschall-Schweißung realisiert werden und eine entlang ihrer Erstreckung diskontinuierliche Bindungsstärke aufweisen. Durch den homogene stoffschlüssige Verbindung entlang der Verbindungsnaht, bevorzugt hergestellt durch das stoffschlüssige Verpressen im Formwerkzeug, ist es in vorteilhafter Weise möglich, die Verbindung, insbesondere die Verbindungsstärke, zwischen der ersten Vliesteilschale und der zweiten Vliesteilschale zu verbessern. Insbesondere hat es sich herausgestellt, dass unter einer Zugbelastung zwischen der ersten Vliesteilschale und der zweiten Vliesteilschale trotz eines Anrisses, d. h. eines teilweisen Auftrennens, ein signifikanter Kraftaufwand erforderlich ist, um die erste Vliesteilschale von der zweiten Vliesteilschale endgültig voneinander zu trennen. Dies ist bei den aus dem Stand der Technik bekannten, durch Infrarotbeleuchtung veranlassten Verschweißungen, nicht der Fall. Hier wird nach einem anfänglichen Auftrennen, eine weiterhin auf die Vliesteilschalen wirkende Zugkraft schnell zu einem endgültigen Auftrennen führen.

Ein weiterer Gegenstand der vorliegenden Erfindung ist ein kanalförmiges Hohlprofilbauteil,
- das zumindest teilweise aus einer ersten Vliesteilschale und einer zweiten Vliesteilschale zusammengesetzt ist, wobei die erste Vliesteilschale und die zweite Vliesteilschale miteinander über eine stoffschlüssige Verbindungsnaht in einem Flanschabschnitt, in dem die erste Vliesteilschale und die zweite Vliesteilschale einander kontaktieren, miteinander verbunden sind, oder
- das zumindest teilweise aus einer ersten Vliesteilschale gebildet ist, die derart geformt ist, das Abschnitte der ersten Vliesteilschale über eine stoffschlüssige Verbindungsnaht in einem Flanschabschnitt, in dem die Abschnitte der ersten Vliesteilschale einander kontaktieren, miteinander verbunden sind. Alle Eigenschaften und Vorteile, die im Zusammenhang mit dem erfindungsgemäßen Verfahren beschrieben wurden, gelten analog für das kanalförmige Hohlprofilbauteil und andersrum.

Der Flanschabschnitt steht dabei vorzugsweise vom generellen Verlauf des Hohlprofilbauteils ab, insbesondere im Wesentlichen senkrecht. Dabei ist der generelle Verlauf des Hohlprofilbauteils durch den Verlauf der Seitenwand des Hohlprofilbauteils festgelegt, der den Kanal des kanalförmigen Hohlprofilbauteils begrenzt. Insbesondere ist der generelle Verlauf in einer senkrecht zur Kanalrichtung verlaufenden Ebene gemeint.

Weiterhin ist es bevorzugt vorgesehen, dass die stoffschlüssige Verbindungsnaht derart gestaltet ist, dass ihre geometrische Form eine widerstandsfähige und langlebige stoffschlüssige Verbindung zwischen der ersten Vliesteilschale und der zweiten Vliesteilschale realisiert. Alternativ ist es vorstellbar, dass die stoffschlüssige Verbindung zwischen zwei Abschnitten der ersten Vliesteilschale und/oder der zweiten Vliesteilschale realisiert wird. Beispielsweise kann die erste Vliesteilschale einen im Querschnitt geschlossenen Verlauf aufweisen, sodass ein erstes Ende mit einem zweiten Ende der ersten Vliesteilschale verbunden werden kann.

Vorzugsweise ist vorgesehen, dass die stoffschlüssige Verbindungsnaht Vorsprünge und/oder Einbuchtungen aufweist, die an einer Oberseite und/oder Unterseite des Flanschabschnitts ausgebildet sind. Vorzugsweise sind die Vorsprünge und/oder Einbuchtungen nur einseitig am Flanschabschnitt ausgebildet. Insbesondere bilden die Vorsprünge und/oder Einbuchtungen die Verbindungsnaht aus, d. h. in den Bereichen mit Vorsprünge und/oder Einbuchtungen im Flanschabschnitt wird die stoffschlüssige Verbindung der Verbindungsnaht gebildet. Es hat sich herausgestellt, dass durch entsprechende Vorsprünge und/oder Einbuchtungen eine langlebige und widerstandsfähige stoffschlüssige Verbindungsnaht zwischen der ersten Vliesteilschale und der zweiten Vliesteilschale bzw. zwischen zwei verschiedenen Abschnitten der ersten Vliesteilschale realisierbar ist. Insbesondere ist es dabei vorgesehen, dass die Vorsprünge und/oder Einbuchtungen jeweils an der ersten Vliesteilschale und/oder der zweiten Vliesteilschale ausgeformt sind. Insbesondere ist es in den Ausführungsbeispielen, in denen die Einbuchtungen und/oder Vorsprünge lediglich an der ersten Vliesteilschale ausgeformt sind, vorgesehen, dass die zweite Vliesteilschale, beispielsweise an der Unterseite des Flanschabschnitts, keine Vorsprünge und/oder Einbuchtungen aufweist.

Alternativ ist es vorstellbar, dass sowohl die erste Vliesteilschale als auch die zweite Vliesteilschale Einbuchtungen und/oder Vorsprünge aufweist, wobei bevorzugt jeweils eine Einbuchtung einem Vorsprung an der Unterseite gegenüberliegt, insbesondere in einer Richtung betrachtet, die senkrecht zur Erstreckungsebene des Flanschabschnitts verläuft. Dadurch kann gewährleistet werden, dass der Flanschabschnitt im Wesentlichen eine konstante Dicke aufweist, auch wenn die Oberfläche der Oberseite und/oder Unterseite des Flanschabschnitts in Längserstreckungsrichtung des Flanschabschnitts moduliert ist. Beispielsweise sind die Einbuchtungen und/oder Vorsprünge deckungsgleich in der senkrecht zur Erstreckungsebene des Flanschabschnitts verlaufenden Richtung zumindest abschnittsweise zueinander angeordnet und/oder zueinander versetzt. Weiterhin ist es bevorzugt vorgesehen, dass sich die Vorsprünge und/oder Einbuchtungen an der Oberseite und die Vorsprünge und/oder Einbuchtungen an der Unterseite in Längserstreckung des Flanschabschnitts abwechsen. Insbesondere ist es vorgesehen, dass sich jeweils ein Vorsprung und eine Einbuchtungen abwechseln oder jeweils ein Paar an Vorsprüngen und ein Paar an Einbuchtungen.

Weiterhin ist es bevorzugt vorgesehen, dass die Vorsprünge und/oder Einbuchtungen zueinander beabstandet sind und/oder aneinander angrenzen. Insbesondere hat sich überraschender Weise herausgestellt, dass ein, insbesondere luftdichtes, Hohlprofilbauteil auch dann realisierbar ist, wenn die Vorsprünge und/oder Einbuchtungen voneinander beabstandet sind. Besonders bevorzugt ist die Verbindungsnaht in Längserstreckungsrichtung des Flanschabschnitts unterbrochen.

Vorzugsweise ist es vorgesehen, dass ein Verhältnis einer Fläche an Vorsprüngen und/oder Einbuchtungen im Flanschabschnitt zu einer Fläche des Flanschabschnitts einen Wert zwischen 0,4 und 0,9, bevorzugt zwischen 0,6 und 0,85 und besonders bevorzugt zwischen 0,7 und 0,85 annimmt. Insbesondere ist die Verbindungsnaht nicht vollflächig am Flanschabschnitt ausgebildet. Es hat sich herausgestellt, dass das Realisieren einer vollflächigen Verbindungsnaht nicht erforderlich ist, um ein funktionstüchtiges und betriebssicheres Hohlprofilbauteil der in Rede stehenden Art zu realisieren.

Weitere Vorteile und Eigenschaften ergeben sich aus der nachfolgenden Beschreibung bevorzugter Ausführungsformen des erfindungsgemäßen Gegenstands mit Bezug auf die beigefügten Figuren. Es zeigt:
- **Fig.1a bis 1f:**: schematisch ein Verfahren zur Herstellung eines Hohlprofilbauteils gemäß einer ersten bevorzugten Ausführungsform der vorliegende Erfindung,
- **Fig.2:**: eine schematische Explosionsdarstellung eines Formwerkzeugs gemäß einer bevorzugten Ausführungsform der vorliegenden Erfindung zusammen mit einer ersten Vliesteilschale und einer zweiten Vliesteilschale,
- **Fig.3a bis 3c**: schematische Darstellungen von Formwerkzeugen gemäß weiterer bevorzugter Ausführungsformen der vorliegenden Erfindung und
- **Fig 4a bis 4j**: schematische Darstellungen von Hohlprofilbauteilen gemäß bevorzugter Ausführungsformen der vorliegenden Erfindung

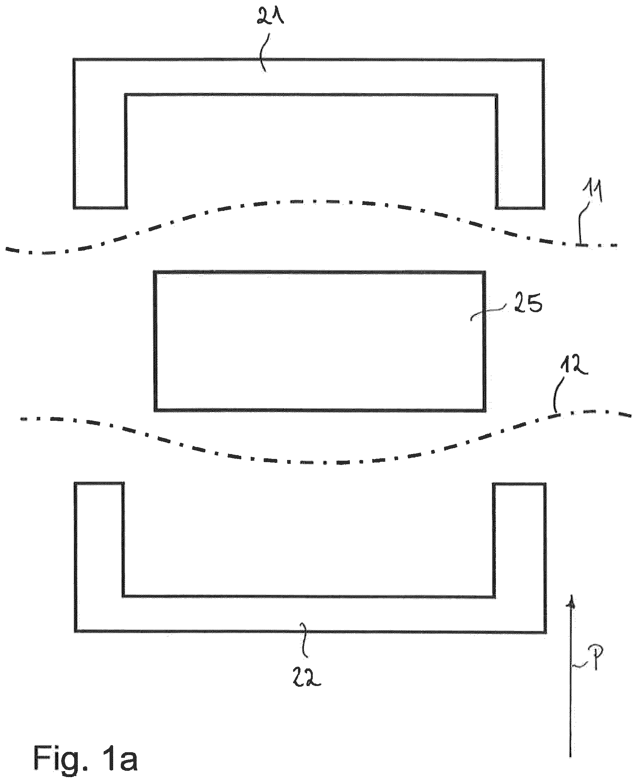

In den Figuren 1a bis 1f ist schematisch ein Verfahren zur Herstellung eines Hohlprofilbauteils 1 gemäß einer ersten bevorzugten Ausführungsform dargestellt. Derartige Hohlprofilbauteile 1, insbesondere kanalförmige Hohlprofilbauteile 1, werden beispielsweise in Fahrzeugen zur Führung von Gas, insbesondere Luft, verwendet oder als Fußraumabdeckung. Entsprechend weisen derartige Hohlprofilbauteile 1 einen Hohlbereich 16 auf, der zumindest entlang einer Schnittebene einen geschlossenen Umfang aufweist. Vorzugsweise erstreckt sich ein derartiges Hohlprofilbauteil 1 entlang einer Vorzugsrichtung, die gerade oder geschwungen sein kann und insbesondere dem generellen Verlauf des kanalförmigen Hohlprofils folgt, und in einer senkrecht zur Vorzugsrichtung verlaufenden Ebene ist eine geschlossene Wandung für das Hohlprofilbauteil 1 vorgesehen. Im Gegensatz zum Stand der Technik ist es dabei vorgesehen, dass das Hohlprofilbauteil 1 aus einem Vlieswerkstoff hergestellt ist. Hierzu werden zunächst eine erste Vlieswerkstofflage 11 und eine zweite Vlieswerkstofflage 12 bereitgestellt. Vorzugsweise entspricht das Material bzw. die Materialzusammensetzung der ersten Vlieswerkstofflage 11 derjenigen der zweiten Vlieswerkstofflage 12. Es ist allerdings auch vorstellbar, zur Ausbildung eines verbundwerkstoffartigen Hohlprofilbauteils 1 eine erste Vlieswerkstofflage 11 aus einer ersten Vliesart und eine zweite Vlieswerkstofflage 12 aus einer zweiten Vliesart bereitzustellen. Zur Ausbildung eines Hohlprofilbauteils 1, insbesondere zur Formgebung des späteren Hohlprofilbauteils 1 ist es insbesondere vorgesehen, die erste Vlieswerkstofflage 11 und/oder die zweite Vlieswerkstofflage 12 in einem Formwerkzeug mit einem Profil bzw. einer Struktur bzw. einer Auswölbung zu versehen. Insbesondere handelt es sich bei dem Formwerkzeug um ein Presswerkzeug mit einer ersten Formwerkzeughälfte 21 und einer zweiten Formwerkzeughälfte 22, die für den Pressvorgang entlang einer Pressrichtung P zusammengeschoben werden bzw. aufeinander gepresst werden. Um gleichzeitig die erste Vlieswerkstofflage 11 und die zweiten Vlieswerkstofflage 12 zu prägen bzw. zu formen, umfasst das Formwerkzeug darüber hinaus einen Kernkörper 25. Der Kernkörper 25 dient sowohl für die erste Vlieswerkstofflage 11 als auch die zweite Vlieswerkstofflage 12 als Stempel bzw. als Widerlager. Insbesondere ist der Kernkörper 25 dazu vorgesehen, als Platzhalter zu dienen für den später ausgebildeten Hohlbereich 16 im Hohlprofilbauteil 1. Hierzu ist es vorgesehen, dass eine Formation aus der ersten Vlieswerkstofflage 11, der zweiten Vlieswerkstofflage 12 und dem Kernkörper 25 zwischen der ersten Formwerkzeughälfte 21 und der zweiten Formwerkzeughälfte 22 angeordnet wird. Dabei wird die Formation aus erster Vlieswerkstofflage 11, zweiter Vlieswerkstofflage 12 und dem Kernkörper 25 durch ein sandwichartiges Anordnen realisiert, bei dem der Kernkörper 25 zwischen der ersten Vlieswerkstofflage 11 und der zweiten Vlieswerkstofflage 12 angeordnet wird. Das heißt: der Kernkörper 25 ist insbesondere entlang der Pressrichtung P zwischen der ersten Vlieswerkstofflage 11 und der zweiten Vlieswerkstofflage 12 angeordnet. Beispielsweise wird die Formation gebildet, indem zunächst die zweite Vliesstoffwerklage 12 auf die zweite Formwerkzeughälfte 22 aufgelegt wird und dann der Kernkörper 25 auf die zweite Vlieswerkstofflage 12 gelegt wird und die erste Vlieswerkstoff lage 11 auf den Kernkörper 25. Dabei ist es insbesondere vorgesehen, dass die erste Vlieswerkstofflage 11 und die zweite Vlieswerkstofflage 12 derart dimensioniert sind, dass sie in der Formation in einer senkrecht zur Pressrichtung P verlaufenden Ebene gegenüber dem Kernkörper 25 vorstehen, insbesondere auf zwei gegenüberliegenden Seiten vorstehen. Insbesondere steht die erste Vlieswerkstofflage 11 und die zweite Vlieswerkstofflage 12 derart weit gegenüber dem Kernkörper 25 über, dass während des Formprozesses, das heißt im geschlossenen Zustand des Formwerkzeugs, die erste Vlieswerkstoff lage 11 und die zweite Vlieswerkstoff lage 12 nicht in das Formwerkzeug vollständig hineingezogen werden, sondern zumindest insoweit vorstehen, dass sie im geschlossenen Zustand entweder aus dem geschlossenen Formwerkzeug hinausragen und/oder Teil eines Rahmens sind, der durch die erste Formwerkzeughälfte 21 und die zweite Formwerkzeughälfte 22 entlang eines äußeren Umfangs des Formwerkzeugs gebildet wird.

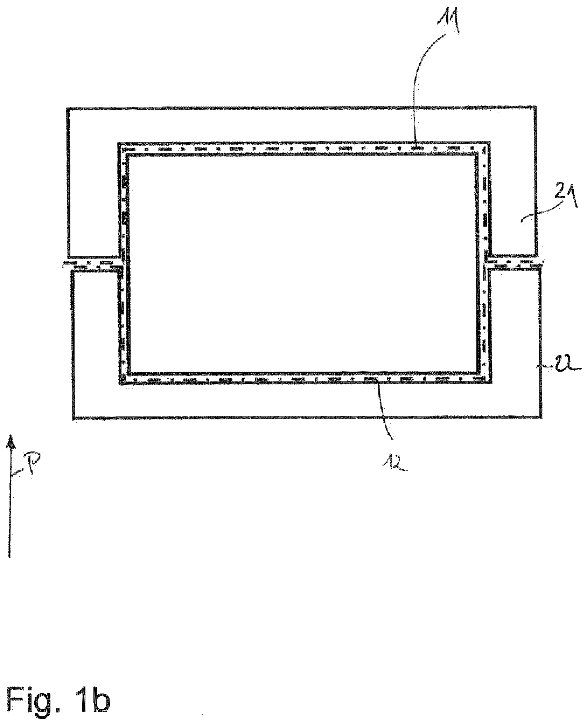

Vorzugsweise werden die erste Vlieswerkstofflage 11 und die zweite Vlieswerkstofflage in einem Ofen, einer Heißpresse und/oder einem Strahlerfeld erwärmt, bevor sie als Teil der Formation in das Formwerkzeug gegeben werden. Es ist auch vorstellbar, dass die erste Formwerkzeughälfte und/oder die zweite Formwerkzeughälfte zumindest teilweise erwärmt werden bzw. temperiert sind, beispielsweise in Bereichen, die beim Verpressen aufeinander gedrückt werden. So können die später für das Fügen vorgesehenen Abschnitte bzw. Bereiche der ersten Vliesstofflage bzw. der zweiten Vliesstofflage länger warm gehalten werden. Durch das Zusammenpressen entlang der Pressrichtung P ist es dann vorgesehen, den Umformungsprozess durchzuführen, so dass aus der ersten Vlieswerkstofflage 11 eine erste Vliesteilschale 31, insbesondere erste Vlieshalbschale, und aus der zweiten Vlieswerkstofflage 12 eine zweite Vlieshalbschale 32 wird. Der Umformungsprozess bzw. Prägeprozess ist in Figur 1b graphisch illustriert.

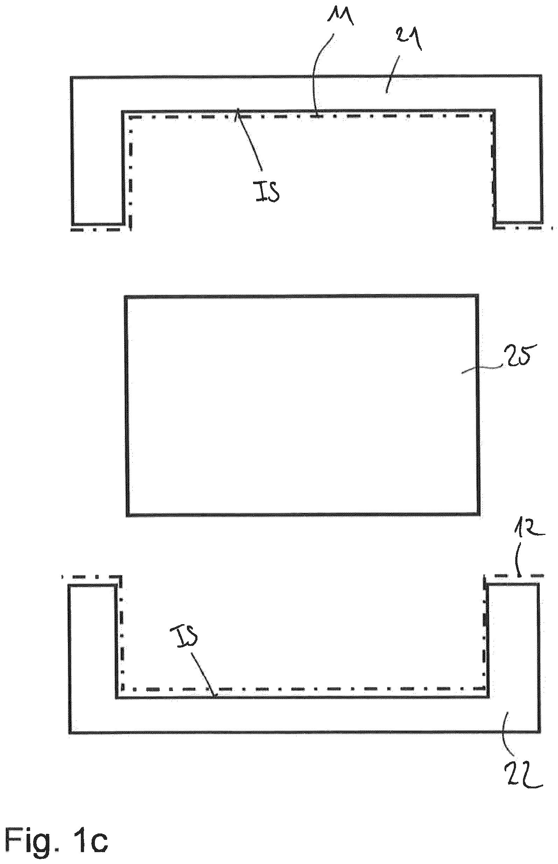

Im Anschluss an den Prägevorgang ist es vorgesehen, dass die erste Formwerkzeughälfte 21 und die zweite Formwerkzeughälfte 22 wieder voneinander getrennt bzw. zueinander distanziert werden (siehe Fig. 1c). In diesem geöffneten Zustand ist es insbesondere vorgesehen, dass die erste Vliesteilschale 31 an der ersten Formwerkzeughälfte 21 anhaftet und die zweite Vliesteilschale 32 an der zweiten Formwerkzeughälfte 22 anliegt, so dass eine einfache Entnahme des Kernkörperelements 25 möglich ist. Insbesondere ist es vorgesehen, dass die erste Vliesteilschale 31 bzw. die zweite Vliesteilschale 32 einen im Querschnitt topfförmigen Verlauf aufweisen. In der dargestellten Ausführungsform sind die erste Vliesteilschale 31 und die zweite Vliesteilschale 32 gleich ausgeformt, insbesondere im Hinblick auf eine Tiefe des topfförmigen Verlaufes der ersten Vliesteilschale 31 und der zweiten Vliesteilschale 32. Es ist allerdings auch vorstellbar, dass sich die erste Vliesteilschale 31 und die zweite Vliesteilschale 32 hinsichtlich ihrer Form unterscheiden, zum Beispiel unterscheidet sich die erste Vliesteilschale 31 von der zweiten Vliesteilschale 32 im Hinblick auf die Tiefe des topfförmig ausgeformten Verlaufs. Insbesondere ist es vorgesehen, dass eine Innenseite der ersten Formwerkzeughälfte 1 und/oder eine Innenseite der zweiten Formwerkzeughälfte 22 vollständig mit der ersten Vlieswerkstofflage 11 bzw. zweiten Vlieswerkstofflage 12 bedeckt ist.

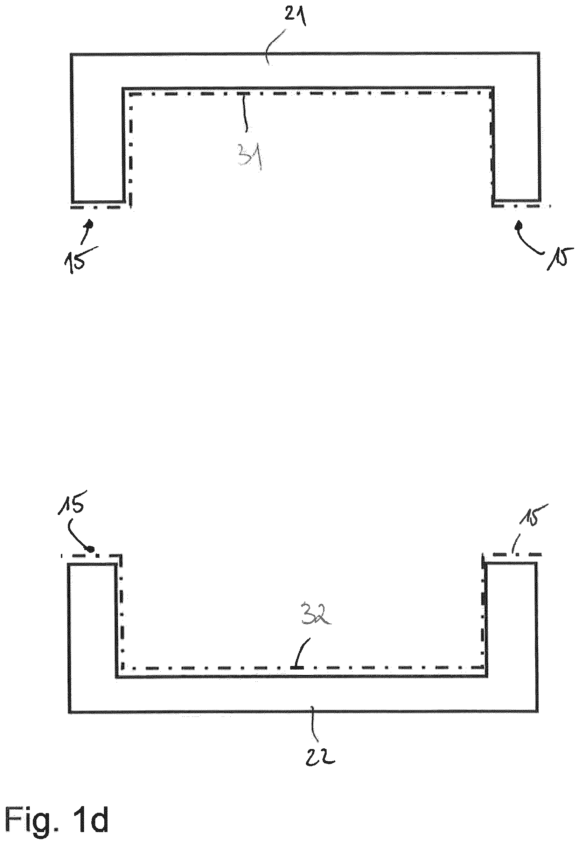

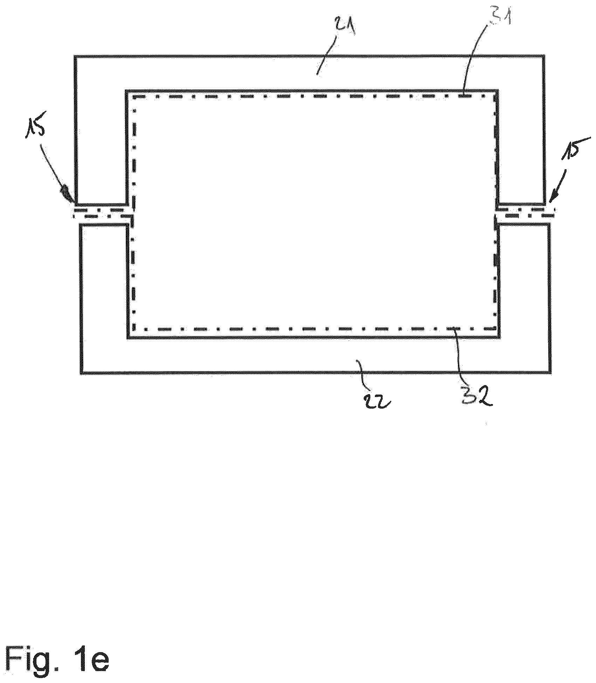

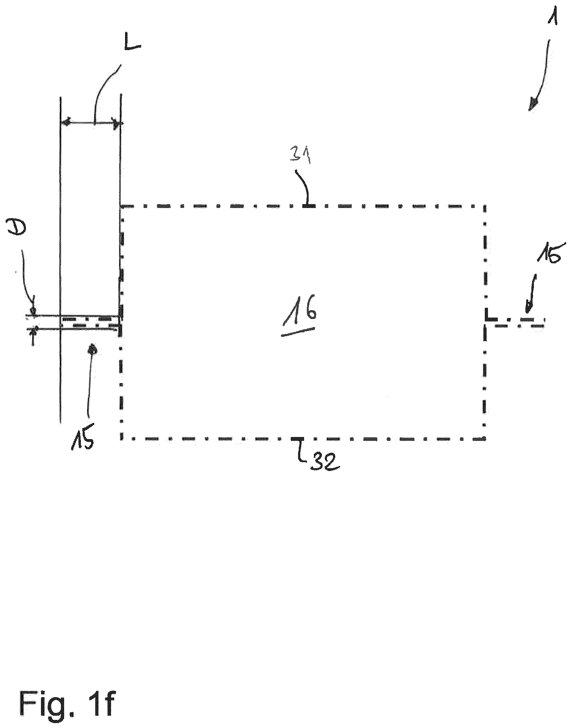

Nach dem Entfernen des Kernkörpers 25, illustriert in Figur 1d, ist es vorgesehen, dass die erste Formwerkzeughälfte 21 und die zweite Formwerkzeughälfte 22 erneut aufeinander zu bewegt werden, insbesondere innerhalb eines festgelegten Zeitintervalls, so dass es möglich ist, eine Restwärme der ersten Vliesteilschale 31 und der zweiten Vliesteilschale 32 dazu zu nutzen, beim erneuten Anpressen der ersten Vliesteilschale 31 an die zweite Vliesteilschale 32 eine Verbindung über einen gemeinsamen Flanschabschnitt 15 zu realisieren (siehe Fig. 1e). Insbesondere ist es vorgesehen, dass die erste Vliesteilschale 31 und die zweite Vliesteilschale 32 jeweils ein Kragenelement aufweisen, die während dieses Pressvorganges zusammengefügt bzw. zusammengeschweißt werden zur Bildung des Flanschabschnittes 15, der vom gefertigten Hohlprofilbauteil 1 vorzugsweise senkrecht absteht. Dabei ist es insbesondere vorgesehen, dass die Verschweißung und Verpressung durch das Aufeinanderpressen von gegenüberliegenden, insbesondere stirnseitigen, Abschnitten der ersten Formwerkzeughälfte 21 und der zweiten Formwerkzeughälfte 22 realisiert wird, während die Kragenelemente der ersten Vliesteilschale 31 und der zweiten Vliesteilschale 32 an den andernfalls unmittelbar aneinander liegenden stirnseitigen bzw. gegenüberliegende Abschnitten angeordnet sind. Dadurch lässt sich in vorteilhafter Weise in dem Formwerkzeug auch der Fügeprozess realisieren, wodurch der Fertigungsprozess vereinfacht und beschleunigt wird. Das gefertigte Hohlprofilbauteil 1 ist in einer Schnittansicht in Figur 1f dargestellt. Zudem hat es sich herausgestellt, dass durch dieses Fügeverfahren vergleichsweise schmale Flanschabschnitte 15 realisierbar sind. Insbesondere ist es möglich, Längen L für die Flanschabschnitte 15 zu realisieren, die Werte zwischen 0,5 mm und 10 mm, bevorzugt zwischen 0,5 mm und 6 mm und besonders bevorzugt zwischen 0,5 mm und 3 mm annehmen. Weiterhin ist es vorgesehen, dass sich dem geformten Flanschabschnitt 15 über den die Verbindung zwischen der ersten Vliesteilschale 31 und der zweiten Vliesteilschale 32 erfolgt, eine Dicke D aufweist, die einen Wert zwischen 0,01 mm und 2 mm, bevorzugt zwischen 0,05 mm und 1,5 mm und besonders bevorzugt zwischen 0,5 mm und 1 mm aufweist.

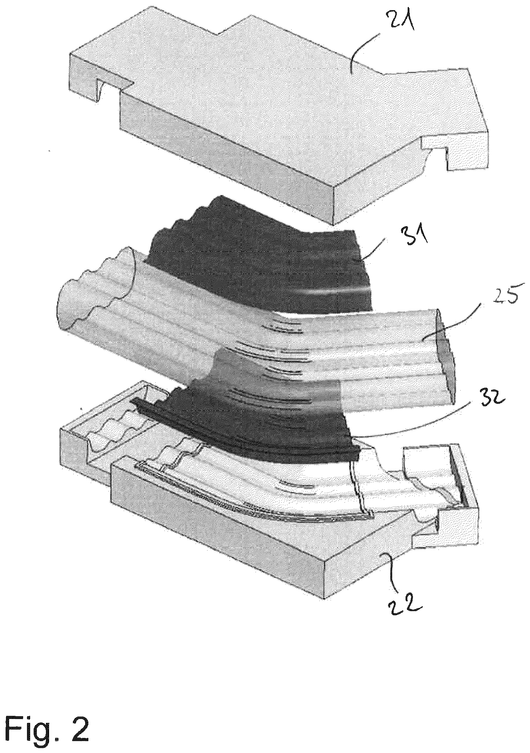

In **Figur 2** ist ein Formwerkzeug gemäß einer bevorzugten Ausführungsform in einer schematischen Explosionsdarstellung dargestellt, wobei zusätzlich eine geformte erste Vliesteilschale 31 und eine zweite 32 Vliesteilschale dargestellt sind. Insbesondere zeichnet sich das Formwerkzeug aus Figur 2 dadurch aus, dass die erste Formwerkzeughälfte 21 und die zweite Formwerkzeughälfte 22 an ihren Innenseiten IS profiliert sind. Dadurch ist es möglich, zum Beispiel eine Rillen- und /oder Wölbungsstruktur in die erste Vliesteilschale 31 miteinzuprägen. Mit anderen Worten: Es ist vorzugsweise möglich, durch die entsprechende Gestaltung der Innenseite IS des Formwerkzeugs dem hergestellten Hohlprofilbauteil 1 eine entsprechende Profilierung entlang seines geschlossenen Umfanges zu verleihen.

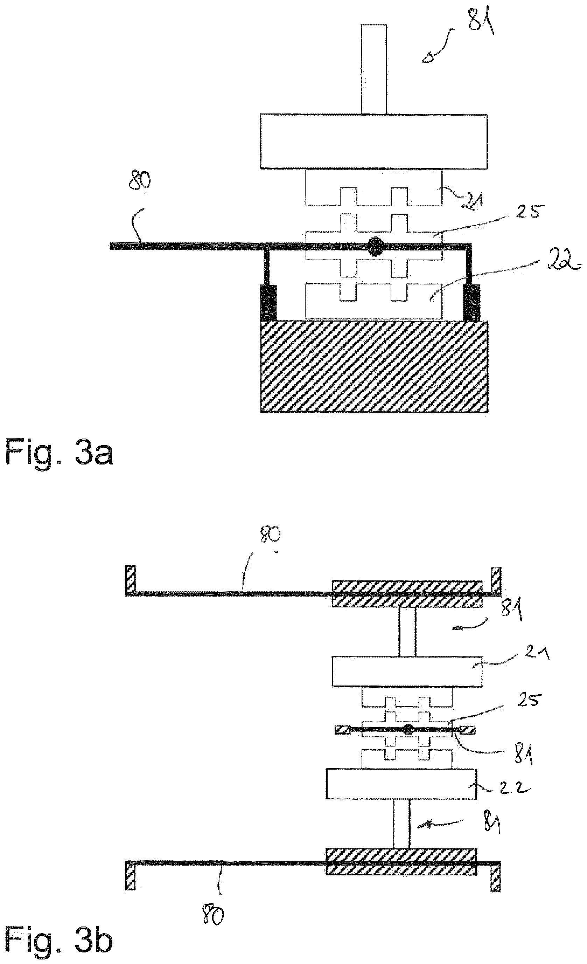

In den **Figuren 3a bis 3c** sind Formwerkzeuge zur Durchführung eines Verfahrens zur Herstellung eines Hohlprofilbausteiles 1 gemäß weiterer bevorzugter Ausführungsform der vorliegenden Erfindung dargestellt. Insbesondere in dem in Figur 3a dargestellten Ausführungsbeispiel ist es vorgesehen, dass die zweite Formwerkzeughälfte 22 ortsfest angeordnet ist und der Kernkörper 25 schiebbar, insbesondere an einer Schiene 80, gelagert ist. Dadurch ist in vorteilhafterweise möglich, bevorzugt automatisiert, den Kernkörper 25 seitlich aus dem Bereich zwischen der ersten Formwerkzeughälfte 21 und der zweiten Formwerkzeughälfte 22 herauszufahren und/oder in den Bereich zwischen der ersten Formwerkzeughälfte 21 und der zweiten Formwerkzeughälfte 22 hineinzufahren. Weiterhin ist es bevorzugt vorgesehen, dass mittels einer Hubeinrichtung 81 die erste Formwerkzeughälfte 21 angehoben und/oder abgesenkt werden kann, um die erste Formwerkzeughälfte 21 auf die zweite Formwerkzeughälfte 22 zu zubewegen und/oder sie von der zweiten Formwerkzeughälfte 22 wegzubewegen. Dadurch lässt sich das Formwerkzeug zum Durchführen des Pressvorgangs, insbesondere für das Umformen und/oder Fügen, in entsprechender Weise bewegen.

In dem in Figur 3b dargestellten Ausführungsbeispiel ist es zusätzlich vorgesehen, dass die erste Formwerkzeughälfte 21 und/oder die zweite Formwerkzeughälfte 22 schiebbar gelagert sind, insbesondere jeweils an einer Schiene 80. Dadurch ist es in vorteilhafter Weise möglich, dass die erste Formwerkzeughälfte 21 und die zweite Formwerkzeughälfte 22 und/oder der Kernkörper 25 verschiebbar sind, insbesondere in eine Position überführbar sind, um das Formwerkzeug zu schließen und/oder zu öffnen, insbesondere um ein Umformen und/oder Fügen der ersten Vlieswerkstofflage 11 und/oder der zweiten Vlieswerkstofflage 12 zu realisieren.

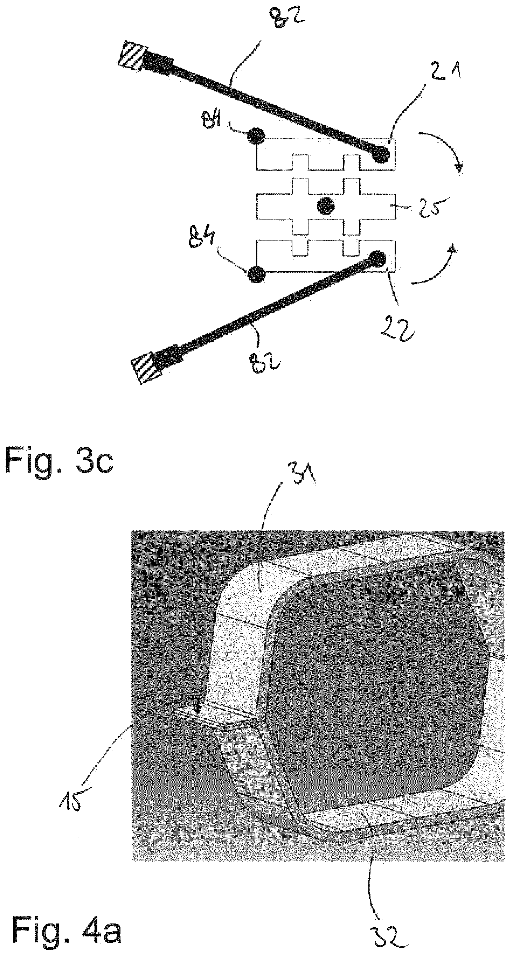

In Figur 3c sind die erste Formwerkzeughälfte 21 und die zweite Formwerkzeughälfte 22 schwenkbar gelagert, insbesondere schwenkbar um jeweils einen Drehpunkt 84 an der ersten Formwerkzeughälfte 21 und/oder der zweiten Formwerkzeughälfte 22. Hierzu sind insbesondere Schwenkarme 82 vorgesehen, mit denen durch eine Schwenkbewegung das Formwerkzeug geöffnet und/oder geschlossen werden kann.

In den **Figuren 4a-4j** sind verschiedene kanalförmige Hohlprofilbauteile 1 gemäß weiterer beispielhafter Ausführungsformen der vorliegenden Erfindung dargestellt. Insbesondere sind in der Regel solche kanalförmigen Hohlprofilbauteile 1 dargestellt, die zusammengesetzt sind aus einer ersten Vliesteilschale 31 und einer zweiten Vliesteilschale 32. Die erste Vliesteilschale 31 und die zweite Vliesteilschale 32 werden über einen lateral bzw. seitlich vom Grundkörper des Hohlprofilkörper 1 abstehenden Flanschabschnitt 15 miteinander verbunden. Insbesondere ist in diesem Flanschabschnitt 15 eine Verbindungsnaht realisiert, mit der die erste Vliesteilschale 31 und die zweite Vliesteilschale 32 miteinander verbunden sind, insbesondere stoffschlüssig miteinander verbunden sind. In dem in Figur 4a dargestellten Ausführungsbeispiel ist die Verbindungsnaht derart realisiert, dass an einer Oberseite OS und/oder an einer Unterseite US des Flanschabschnitts 15 ebene, insbesondere glatte, Oberflächen ausgebildet sind. Mit anderen Worten: es sind keinerlei Erhebungen und/oder Vorsprünge durch die Verbindungsnaht zwischen der ersten Vliesteilschale 31 und der zweiten Vliesteilschale 32 ausgeprägt.

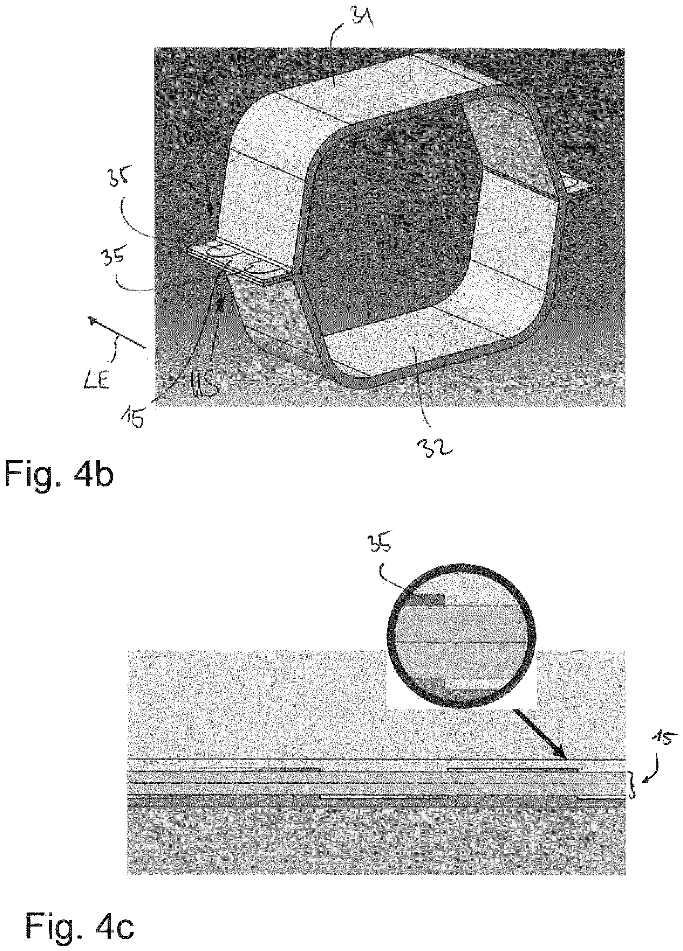

In dem in Figur 4b dargestellten Ausführungsbeispiel sind Vorsprünge 35 an der Oberseite OS des Flanschabschnitts 15 ausgebildet. Dabei sind die Vorsprünge 35 in Längserstreckungsrichtung LE des Flanschabschnitts 15 voneinander beabstandet. Die in Figur 4b beispielhaft dargestellten Vorsprünge 35 sind in Figur 4c im Detail dargestellt. Insbesondere ist es vorgesehen, dass solche Vorsprünge 35 durch entsprechende Rücksprünge bzw. Taschen an der ersten Formwerkzeughälfte 21 und/oder der zweiten Formwerkzeughälfte 22 ausgebildet werden. Dabei handelt es sich bei den Vorsprüngen 36 um jeweils solche Materialanhäufungen beziehungsweise Materialvorsprünge, die gegenüber der Oberseite des Flanschabschnitts 15 vorstehen und die nicht dadurch entstehen, dass die erste Vlieswerkstofflage 21 und die zweite Vlieswerkstofflage 22 gemeinsam deformiert werden. Vielmehr ist der Vorsprung 35 bzw. die Erhebung an der ersten Vliesteilschale 31 ausgeprägt, ohne dass eine entsprechende Einbuchtung 36 an der zweiten Vliesteilschale 32 vorhanden ist. Die Flanschabschnitt 15 ist ferner in diesem Ausführungsbeispiel nur einseitig durch die Verbindungsnaht strukturiert.

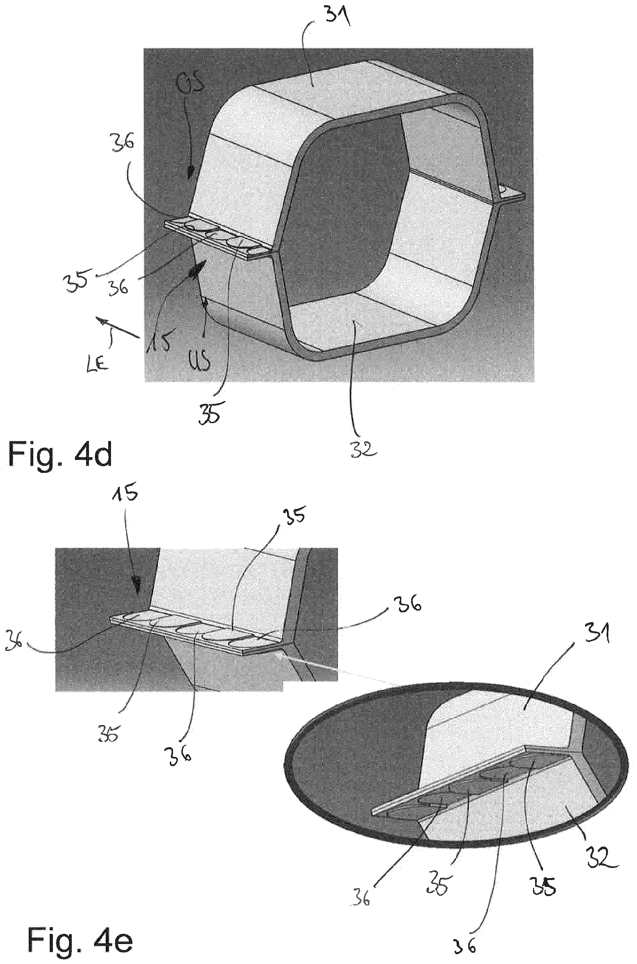

In Figur 4d ist ein Ausführungsbeispiel für eine Verbindungsnaht dargestellt, bei der in Längserstreckungsrichtung LE im Flanschabschnitt 15 abwechselnd Vorsprünge 35 und Einbuchtungen 36 abwechselnd angeordnet sind. Insbesondere ist es beispielsweise vorgesehen, dass Einbuchtungen 36 und Vorsprünge 35 sich unmittelbar aneinander anschließen, d. h. kein Abstand zwischen Vorsprüngen 35 und Erhebungen 36 ausgebildet ist. Alternativ ist es vorstellbar, dass zwischen Vorsprüngen 35 und Einbuchtungen 36 gleiche Abstände und/oder unterschiedliche Abstände realisiert sind. Vorzugsweise sind die Einbuchtungen 36 und/oder Vorsprünge 35 als inselartige bzw. halbinselartige Ausbuchtungen ausgestaltet. Grundsätzlich sind auch elliptische bzw. ovale Formen für die Einbuchtungen 36 und Vorsprünge 35 vorstellbar. Weiterhin ist es bevorzugt vorgesehen, dass in der ersten Vliesteilschale 31 und der zweiten Vliesteilschale 32 an Ober- und Unterseite jeweils gegenüberliegend eine Einbuchtung 36 und ein Vorsprung 35 ausgebildet ist.

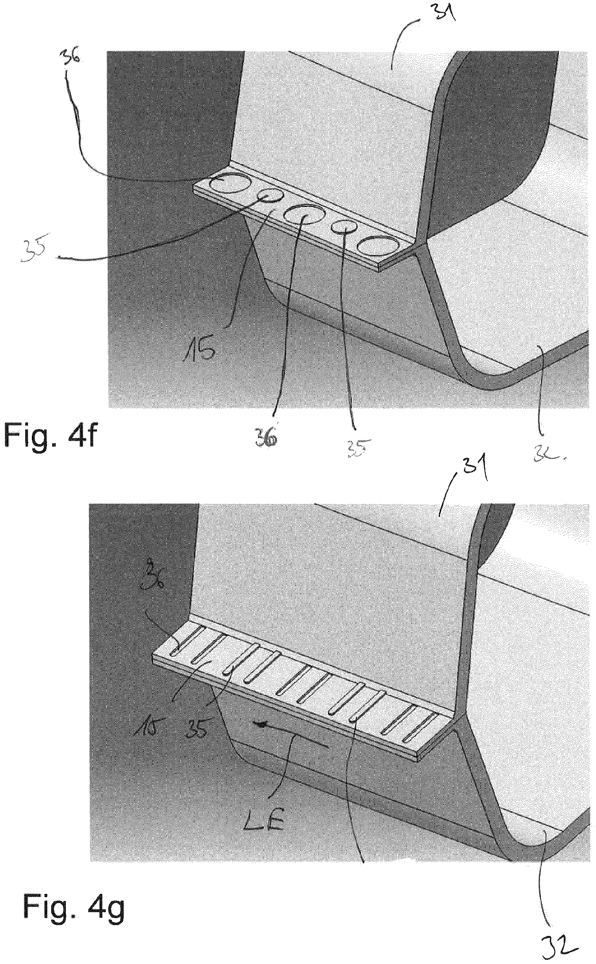

In der Figur 4f ist ein kanalförmiges Hohlprofil 1 dargestellt, das sich im Wesentlichen von dem aus der Figur 4e dahingehend unterscheidet, dass die Vorsprünge 35 und/oder Einbuchtungen 36 statt der inselförmigen Gestalt kreisförmige Formen annehmen. Dabei ist es vorstellbar, dass sich die Größe für Einbuchtungen 36 und/oder Vorsprünge 35 unterscheiden. Alternativ ist es vorstellbar, dass sich die Größen von Vorsprüngen 35 und/oder Einbuchtungen 36 ähneln bzw. einander entsprechen. Dabei können die Flächen beispielsweise übereinstimmen, aber die Formen voneinander abweichen.

In Figur 4g ist ein weiteres Ausführungsbeispiel für ein kanalförmiges Hohlprofil beziehungsweise einen kanalförmigen Hohlprofilkörper dargestellt, bei dem der Flanschabschnitt 15 Vorsprünge und/oder Einbuchtungen 36 aufweist. Dabei unterscheidet sich das Ausführungsbeispiel aus der Figur 4g lediglich dahingehend von den Ausführungsbeispielen der Figuren 4e und 4f, dass als Vorsprünge und/oder Einbuchtungen ein gradliniger Verlauf angenommen wird. Dabei verlaufen die gradlinigen Einbuchtungen und/oder Vorsprünge vorzugsweise senkrecht und/oder schräg zur Längserstreckungsrichtung des Flanschabschnitts.

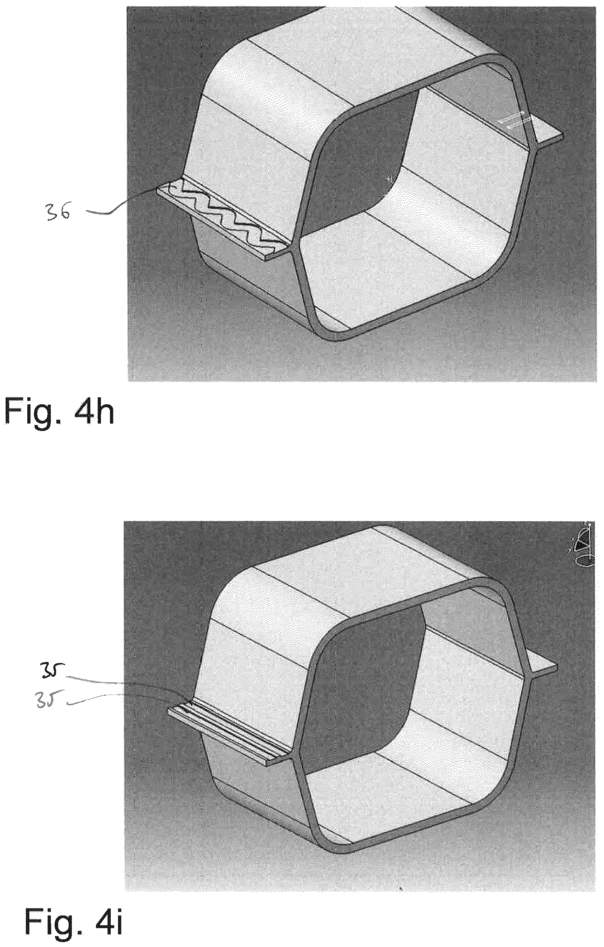

In Figur 4h ist ein Ausführungsbeispiel für ein kanalförmiges Hohlprofil 1 dargestellt, bei dem eine Einbuchtung 36 in Gestalt einer schlangenförmigen Nut im Flanschabschnitt 15 ausgebildet ist. Alternativ ist es vorstellbar, dass die Einbuchtung als zackenförmige Nut im Flanschabschnitt 15 ausgebildet ist.

In Figur 4i ist ein weiteres Ausführungsbeispiel für einen kanalförmigen Hohlprofilkörper 1 dargestellt, bei dem Einbuchtungen 36 in Form von zwei parallel zueinander verlaufenen nutförmigen Einkerbungen realisiert sind, die insbesondere parallel zur Längserstreckungsrichtung LE des Flanschabschnitts 15 verlaufen.

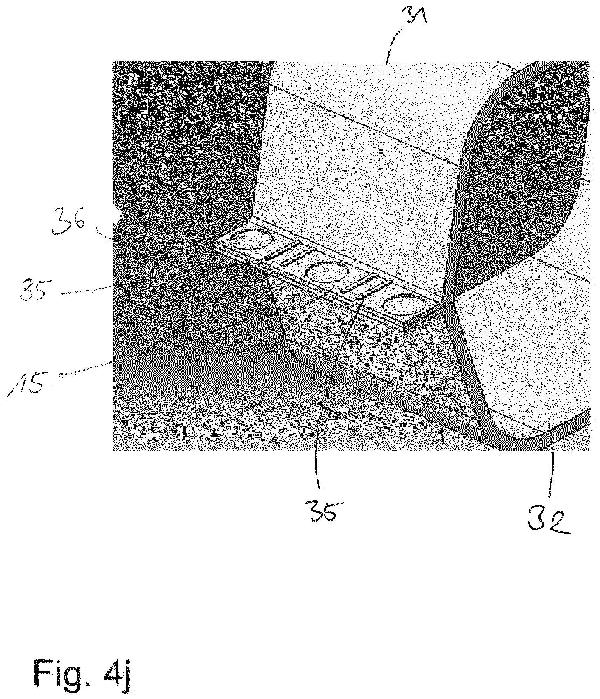

In Figur 4j ist ein weiteres Ausführungsbeispiel für einen kanalförmigen Hohlprofilkörper 1 dargestellt, bei dem sich die Verbindungsnaht von derjenigen in den voranstehenden Ausführungsbeispielen dahingehend unterscheidet, dass für Vorsprünge 35 und Einbuchtungen36 unterschiedliche geometrische Formen vorgesehen sind. Insbesondere ist es hier vorgesehen, dass die Vorsprünge 35 als gradlinige Verläufe ausgebildet sind, während die Einbuchtungen 36 als kreisförmige Einbuchtungen ausgestaltet sind. Vorsprünge 35 und/oder Einbuchtungen 36 nehmen die Form von geradlinigen Streben bzw. Stäben an.

### Bezugszeichenliste:

- 1: Hohlprofilbauteil
- 11: erste Vlieswerkstofflage
- 12: zweite Vlieswerkstofflage
- 15: Flanschabschnitt
- 16: Hohlbereich
- 21: erste Formwerkzeughälfte
- 22: zweite Formwerkzeughälfte
- 31: erste Vliesteilschale
- 32: zweite Vliesteilschale
- 35: Vorsprung
- 36: Einbuchtung
- 25: Kernkörper
- 80: Schiene
- 81: Hubeinrichtung
- 82: Schwenkarm
- 84: Drehpunkt
- P: Pressrichtung
- IS: Innenseite
- L: Länge
- D: Dicke
- LE: Längserstreckung

## Patentansprüche

1. Verfahren zur Herstellung eines Hohlprofilbauteils (1), insbesondere eines kanalförmigen Hohlprofilbauteils (1), aus einem Vlieswerkstoff, umfassend:
- Bereitstellen einer ersten Vlieswerkstofflage (11) und einer zweiten Vlieswerkstofflage (12),
- Anordnen der ersten Vlieswerkstofflage (11) und der zweiten Vlieswerkstofflage (12) in einem Formwerkzeug mit einer ersten Formwerkzeughälfte (21), einer zweiten Formwerkzeughälfte (22) und einem Kernkörper (25), wobei zwischen der ersten Formwerkzeughälfte (21) und der zweite Formwerkzeughälfte (22) eine Formation aus der ersten Vlieswerkstofflage (11), der zweiten Vlieswerkstofflage (12) und dem Kernkörper (25) angeordnet wird, wobei in der Formation der Kernkörper (25) zwischen dem ersten Vlieswerkstofflage (11) und der zweiten Vlieswerkstofflage (12) angeordnet ist, und
- Umformen, insbesondere gleichzeitiges Umformen, der ersten Vlieswerkstofflage (11) und der zweiten Vlieswerkstoff lage (12) im Formwerkzeug zur Bildung einer ersten Vliesteilschale (31) und/oder einer zweiten Vliesteilschale (32), wobei nach dem Umformen die erste Vliesteilschale (31) und die zweite Vliesteilschale (32) im Formwerkzeug zusammengefügt werden **dadurch gekennzeichnet, dass** die erste Vliesteilschale (31) und die zweite Vliesteilschale (32) mittels einer Restwärme der ersten Vliesteilschale (31) und /oder der zweiten Vliesteilschale (32) miteinander verschweißt werden.

2. Verfahren gemäß Anspruch 1, wobei der Kernkörper (25) vor dem Zusammenfügen aus dem Formwerkzeug entfernt wird.

3. Verfahren gemäß einem der vorhergehenden Ansprüche, wobei die erste Formwerkzeughälfte (21) und/oder die zweite Formwerkzeughälfte (22) und/oder der Kernkörper (25) aus einem Metall, insbesondere aus Aluminium und/oder Stahl, gefertigt sind.

4. Verfahren gemäß einem der vorhergehenden Ansprüche, wobei die erste Vliesteilschale (31) und die zweite Vliesteilschale (32) über einen am späteren Hohlprofilbauteil (1) abstehenden Flanschabschnitt (15) miteinander gefügt werden, wobei der Flanschabschnitt (15)
- mit einer Länge (L) zwischen 0,5 mm und 10 mm, bevorzugt zwischen 0,5 mm und 6 mm und besonders bevorzugt zwischen 0,5 mm und 3 mm absteht und/oder
- eine Dicke (D) aufweist, die einen Wert zwischen 0,01 mm und 3 mm, bevorzugt zwischen 0,05 mm und 2 mm und besonders bevorzugt zwischen 0,5 mm und 2 mm.

5. Verfahren gemäß einem der vorhergehenden Ansprüche, wobei die erste Vlieswerkstofflage (11) und/oder die zweite Vlieswerkstoff lage (12) aus einem Vlies mit einer Grammatur zwischen 1 und 2500 g/m², bevorzugt zwischen 100 und 2000 g/m² und besonders bevorzugt mit einer Grammatur zwischen 400 g/m² und 950 g/m² hergestellt ist.

## Claims

1. Method for producing a hollow profile component (1), in particular a channel-shaped hollow profile component (1), from a nonwoven material, comprising:
- Providing a first nonwoven material layer (11) and a second nonwoven material layer (12),
- arranging the first nonwoven material layer (11) and the second nonwoven material layer (12) in a mold having a first mold half (21), a second mold half (22) and a core body (25), wherein between the first mold half (21) and the second mold half (22) a formation of the first nonwoven material layer (11), the second nonwoven material layer (12) and the core body (25) being arranged, wherein in the formation the core body (25) is arranged between the first nonwoven material layer (11) and the second nonwoven material layer (12), and
- forming, in particular simultaneous forming, of the first nonwoven material layer (11) and the second nonwoven material layer (12) in the forming tool to form a first nonwoven part shell (31) and/or a second nonwoven part shell (32), wherein after forming the first nonwoven partial shell (31) and the second nonwoven partial shell (32) are joined together in the forming tool, **characterized in that** the first nonwoven partial shell (31) and the second nonwoven partial shell (32) are welded to each other by means of a residual heat of the first nonwoven partial shell (31) and/or the second nonwoven partial shell (32).

2. The method according to claim 1, wherein the core body (25) is removed from the mold prior to assembly.

3. Method according to one of the preceding claims, wherein the first mold half (21) and/or the second mold half (22) and/or the core body (25) are made of a metal, in particular of alumini-um and/or steel.

4. Method according to any one of the preceding claims, wherein the first nonwoven sub-shell (31) and the second nonwoven sub-shell (32) are joined together via a flange section (15) projecting from the late hollow profile component (1), the flange section (15) being
- protrudes with a length (L) between 0.5 mm and 10 mm, preferably between 0.5 mm and 6 mm and particularly preferably between 0.5 mm and 3 mm and/or
- has a thickness (D) having a value between 0.01 mm and 3 mm, preferably between 0.05 mm and 2 mm and particularly preferably between 0.5 mm and 2 mm.

5. Method according to any one of the preceding claims, wherein the first nonwoven material layer (11) and/or the second nonwoven material layer (12) is made of a nonwoven having a grammage between 1 and 2500 g/m2, preferably between 100 and 2000 g/m2, and particularly preferably having a grammage between 400 g/m2 and 950 g/m2.

## Revendications

1. Procédé de fabrication d'un composant profilé creux (1), en particulier d'un composant profilé creux (1) en forme de canal, à partir d'un matériau non tissé, consistant à :
- fournir une première couche de matériau non tissé (11) et d'une deuxième couche de matériau non tissé (12),
- agencer la première couche de matériau non tissé (11) et la deuxième couche de matériau non tissé (12) dans un outil de formage ayant une première moitié d'outil de formage (21), une deuxième moitié d'outil de formage (22) et un corps de noyau (25), en agençant un ensemble constitué de la première couche de matériau non tissé (11), de la deuxième couche de matériau non tissé (12) et du corps de noyau (25) entre la première moitié d'outil de formage (21) et la deuxième moitié d'outil de formage (22), le corps de noyau (25) dans ledit ensemble étant agencé entre la première couche de matériau non tissé (11) et la deuxième couche de matériau non tissé (12), et
- mettre en forme, en particulier mettre en forme simultanément, la première couche de matériau non tissé (11) et la deuxième couche de matériau non tissé (12) dans l'outil de formage pour constituer une première coque partielle de matériau non tissé (31) et/ou une deuxième coque partielle de matériau non tissé (32), sachant qu'après la mise en forme, la première coque partielle de matériau non tissé (31) et la deuxième coque partielle de matériau non tissé (32) sont assemblées dans l'outil de formage,
**caractérisé en ce que**
la première coque partielle de matériau non tissé (31) et la deuxième coque partielle de matériau non tissé (32) sont soudées l'une à l'autre à l'aide d'une chaleur résiduelle de la première coque partielle de matériau non tissé (31) et/ou de la deuxième coque de matériau non tissé (32).

2. Procédé selon la revendication 1,
dans lequel le corps de noyau (25) est retiré de l'outil de formage avant l'assemblage.

3. Procédé selon l'une des revendications précédentes,
dans lequel la première moitié d'outil de formage (21) et/ou la deuxième moitié d'outil de formage (22) et/ou le corps de noyau (25) sont fabriqués en un métal, en particulier en aluminium et/ou en acier.

4. Procédé selon l'une des revendications précédentes,
dans lequel la première coque partielle de matériau non tissé (31) et la deuxième coque partielle de matériau non tissé (32) sont assemblées l'une à l'autre par l'intermédiaire d'une section de bride (15) dépassant du composant profilé creux (1) ultérieur, la section de bride (15)
- dépassant d'une longueur (L) comprise entre 0,5 mm et 10 mm, de préférence entre 0,5 mm et 6 mm et de manière particulièrement préférée entre 0,5 mm et 3 mm, et/ou
- présentant une épaisseur (D) qui a une valeur comprise entre 0,01 mm et 3 mm, de préférence entre 0,05 mm et 2 mm et de manière particulièrement préférée entre 0,5 mm et 2 mm.

5. Procédé selon l'une des revendications précédentes,
dans lequel la première couche de matériau non tissé (11) et/ou la deuxième couche de matériau non tissé (12) est fabriquée à partir d'un matériau non tissé ayant un grammage compris entre 1 et 2500 g/m², de préférence entre 100 et 2000 g/m², et de manière particulièrement préférée un grammage compris entre 400 g/m² et 950 g/m².
